# EUROPÄISCHE PATENTSCHRIFT

(11) **EP 2 254 972 B1**
(45) Veröffentlichungstag und Bekanntmachung des Hinweises auf die Patenterteilung: **29.04.2015**
(21) Anmeldenummer: 09723476.9
(22) Anmeldetag: 18.03.2009
(51) Int. Cl.: C10J 3/46, C10J 3/66

(54) **VERFAHREN UND VORRICHTUNG ZUR HERSTELLUNG VON SYNTHESEGAS AUS BIOMASSE**
METHOD AND DEVICE FOR PRODUCING SYNTHESIS GAS FROM BIOMASS
PROCÉDÉ ET DISPOSITIF POUR LA PRODUCTION DE GAZ DE SYNTHÈSE À PARTIR DE BIOMASSE

(30) Priorität: 18.03.2008 DE 102008014799
(43) Veröffentlichungstag der Anmeldung: 01.12.2010
(73) Patentinhaber: Tetzlaff, Karl-Heinz, 65779 Kelkheim (DE)
(72) Erfinder: Tetzlaff, Karl-Heinz, 65779 Kelkheim (DE)
(74) Vertreter: Cohausz & Florack
(86) Internationale Anmeldenummer: PCT/EP2009/053195
(87) Internationale Veröffentlichungsnummer: WO 2009/115549

(56) Entgegenhaltungen:
- EP-A2- 0 979 857
- EP-A2- 1 312 662
- DE-A1- 1 931 166
- DE-A1- 3 004 111
- DE-A1- 3 228 532
- FR-A1- 2 863 920
- GB-A- 2 164 660
- US-A- 3 128 164
- US-A- 4 441 892
- US-A- 4 799 937

## Beschreibung

Die Erfindung betrifft ein Verfahren zur thermochemischen Herstellung von Synthesegas aus Biomasse.

### Hintergrund der Erfindung

Synthesegas aus Biomasse ist das Ausgangsprodukt für die künftige solare Wasserstoffwirtschaft, bei welcher der Wasserstoff per Rohrleitung zum Endkunden geliefert wird. Durch die hohe Effizienz bei der dezentralen Verstromung des Wasserstoffs ergibt sich bei fast allen Endverbrauchern ein Überschuss an Strom. Strom und Wärme haben in dieser wärmegeführten Energiewirtschaft also den gleichen Wert. Aus diesem Grund ist der Einsatz von elektrischer Energie zur Bereitstellung der Reaktionsenthalpie für die Herstellung von Synthesegas wirtschaftlich. Da bei Stromüberschuss Strom nur begrenzt handelbar ist, muss solarer Strom, beispielsweise aus Windenergie, per Wasserelektrolyse in Wasserstoff und Sauerstoff umgewandelt werden. Der Sauerstoff steht daher für die thermochemische Vergasung zur Verfügung. Zur Beherrschung der Logistik bei der Bereitstellung von Biomasse aus der Land- und Forstwirtschaft ist eine Anlagengröße zwischen 20 und 500 MW optimal. Die Anlagen sollten auch unter erhöhtem Druck zwischen 6 und 40 bar arbeiten können, damit das erzeugte Gas direkt in das regionale Gasnetz eingespeist werden kann.

### Stand der Technik

Für die thermochemische Herstellung von Synthesegas aus Biomasse sind im Wesentlichen drei Verfahren bekannt.

Für den kleinen Leistungsbereich findet man überwiegend Festbettvergaser in verschiedenen Varianten. Festbettvergaser sind auf eine gleichbleibende hohe Qualität der Biomasse angewiesen und eignen sich nicht zur Herstellung von Synthesegas hoher Qualität, das für die Weiterverarbeitung zu Wasserstoff geeignet ist.

Der Flugstromvergaser eignet sich besonders für hohe Leistungen ab 1 GW, weil die Reaktorgröße des Flugstromvergasers relativ klein ist. Für kleine Anlagen ist der Flugstromvergaser wegen des hohen apparativen Aufwandes unwirtschaftlich. Der Flugstromvergaser erfordert weitgehend trockene Biomasse bzw. Vorprodukte, weil der Flugstromvergaser bei hohen Temperaturen mit reinem Sauerstoff arbeitet. Die Asche schmilzt glasartig auf und ist als Mineraldünger nicht verwendbar. Das ist angesichts teurer und knapper werdender Düngemittel problematisch.

Der Wirbelschichtreaktor hat seine Stärken im mittleren industriellen Leistungsbereich von 1 MW bis 1 GW. Bei Verfahren mit Wirbelschichtreaktoren unterscheidet man die autotherme Vergasung und die allotherme Vergasung. Bei der autothermen Vergasung wird ein Teil der Biomasse im Wirbelschichtreaktor zur Abdeckung der ablaufenden endothermen Reaktionen verbrannt. Bei der allothermen Vergasung erfolgt die Einkopplung der notwendigen Wärme durch Wärmeübertragung. Das kann beispielsweise durch Heizstäbe im Wirbelbett geschehen oder durch einen umlaufenden Wärmeträger. Als Wärmeträger wird meistens Sand verwendet, der in einem zweiten Reaktor durch Verbrennung eines Teils der Biomasse aufgeheizt wird. Ein Solcher Vergaser mit einer thermischen Leistung von 8 MW befindet sich in Güssing, Österreich. Diese Anlage wurde vorgestellt auf der 1st International Ukrainian Conference on BIOMASS FOR ENERGY; September 23-27, 2002 Kyiv, Ukraine von M. Bolhar-Nordenkampf et all. unter dem Titel: "Scale-up of a 100 KWₜₕ pilot FICFB to 8 MWₜₕ FICFB-gasifier demonstration plant in Güssing (Austria)". In DE 10 2004 045 772 A1 ist ein Verfahren mit einem umlaufenden Wärmeträger bekannt, das zusätzlich die Wärmetönung bei der Umwandlung von CaO zu CaCO₃ ausnutzt. Der Wirbelschichtreaktor wird unterhalb der Sintertemperatur der gebildeten Asche betrieben, was die Asche als Mineraldünger verwendbar macht.

Als Wirbelgas und Oxidationsmittel für den Kohlenstoff wird im Synthesegasreaktor mit einer Wirbelschicht, Sauerstoff, Luft und Wasserdampf eingesetzt. Bei der allothermen Vergasung wird in der Regel nur Wasserdampf eingesetzt. Die autotherme Vergasung wird mit Luft betrieben. Reiner Sauerstoff wird in Mischungen mit Wasserdampf und Luft verwendet, weil reiner Sauerstoff zu örtlichen Überhitzungen im Wirbelbett führen würde. Die Verwendung von Luft führt zur Verdünnung des Synthesegases mit Stickstoff und CO₂, was die Nutzung zur Stromerzeugung und Weiterverarbeitung zu Produkten wie Wasserstoff, Methan, Methanol oder flüssigen Treibstoffen erschwert. Die Bereitstellung von Wasserdampf erfordert einen zusätzlichen Aufwand von Energie und erhöht die Investitionskosten.

Nach dem Stand der Technik wird die Biomasse direkt in die Wirbelschicht des Synthesegasreaktors eingespeist. Im Wirbelbett laufen die Pyrolyse zu primären Teeren und die abschließende Reaktion zu Synthesegas simultan innerhalb kurzer Zeit ab. Daher ist der Teergehalt im Synthesegas sehr hoch. Der Teer muss mit aufwändigen Methoden entfernt werden. Teerablagerungen in Apparaten führen darüber hinaus häufig zum Versagen der ganzen Anlage.

Von allen bekannten Vergasungsverfahren zeichnet sich die Vergasung in einem Wirbelschichtreaktor dadurch aus, dass die Asche nicht aufgeschmolzen wird und daher in der Landwirtschaft als Mineraldünger verwendbar ist. Das gewonnene Synthesegas weist aber einen hohen Teergehalt auf. Das ist bei der Nutzung des Synthesegases von großem Nachteil.

Es ist Aufgabe der Erfindung, die geschilderten Nachteile bei der Erzeugung von Synthesegas aus Biomasse zu vermeiden.

Die Aufgabe wird mit dem erfindungsgemäßen Verfahren nach Anspruch 1 gelöst. Weitere vorteilhafte Ausgestaltungen der Erfindung sind in den Ansprüchen 2 bis 8 beschrieben.

Unter Biomasse sind hier alle Stoffe biologischen Ursprungs zu verstehen. Synthesegas besteht überwiegend aus H₂, CO, CO₂ und CH₄.

Biomasse für energetische Zwecke enthält gewöhnlich mehr Wasser als zur allothermen Herstellung eines wasserstoffreichen Synthesegases erforderlich ist. Spaltet man also Biomasse durch Pyrolyse bzw. Verschwelung in Pyrolysekoks und Pyrolysegas auf, so steht im Pyrolysegas genügend Wasserdampf zur Verfügung, um den Kohlenstoff der Biomasse zu CO und CO₂ zu oxidieren. Das Pyrolysegas kann daher vorteilhafter Weise als Wirbelgas für einen Synthesegasreaktor mit Wirbelschicht verwendet werden. Die Bereitstellung von Wasserdampf als Wirbelgas kann somit entfallen. Überschüssiger Wasserdampf würde die Effizienz der Anlage herabsetzen. Um den Energiebedarf der endothermen Reaktionen zu Synthesegas bereitzustellen, ist eine Energiezufuhr in den Synthesegasreaktor erforderlich, beispielweise durch eine innen liegende Heizung oder aus einem Sandkreislauf im Verbund mit einem separaten Reaktor. Technologien zur Beheizung eines Wirbelschichtreaktors sind an sich bekannt. Bei hohen Gasgeschwindigkeiten wird ein Teil der Wirbelschicht ausgetragen und muss mit einem Zyklon abgeschieden und in den Reaktor zurückgeführt werden. Man nennt das eine zirkulierende Wirbelschicht. Bei kleineren Gasgeschwindigkeiten werden nur feine Partikel und Asche aus dem Wirbelbett ausgetragen. Man nennt das eine stationäre Wirbelschicht. Das erfindungsgemäße Verfahren eignet sich für alle Formen von Wirbelschichten.

Die pyrolytische Zersetzung der Biomasse ist an sich bekannt. In DE 601 20 957 T2 ist beschrieben, wie die Biomasse durch Nutzung der fühlbaren Wärme des Prozesses durch direkte Beheizung der Biomasse über eine Wand oder indirekte Beheizung mit überhitzten Wasserdampf verschwelt werden kann. Auch die Nutzung von Sauerstoff für die Verschwelung zu Pyrolysegas und Pyrolysekoks ist an sich bekannt.

Der Pyrolyseprozess kann auf mehrere Reaktoren aufgeteilt sein, beispielsweise in eine Niedertemperaturpyrolyse zur Nutzung der fühlbaren Wärme des Synthesegases und nachgeschalteter Prozesse mit exothermer Wärmetönung und in eine Hochtemperaturpyrolyse, bei welcher flüchtige teerbildende Inhaltsstoffe der Biomasse aus dem Pyrolysekoks ausgetrieben werden. Mit diesem weitgehend entteerten Pyrolysekoks kann der Teergehalt im Synthesegas nach dem Synthesegasreaktor schon deutlich herabgesetzt werden.

Der Teergehalt wird noch weiter abgesenkt, weil das Pyrolysegas vor Eintritt in die Wirbelschicht des Synthesegasreaktors durch eine Heizvorrichtung oder Zugabe von Sauerstoff auf Temperaturen von 850°C bis 1600°C, vorzugsweise auf Temperaturen von 900°C bis 1300°C, besonders bevorzugt auf Temperaturen von 950°C bis 1200°C, erhitzt wird. Damit werden die Teere im Pyrolysegas weitgehend zerstört. Wenn die Temperatur höher gewählt wird als der Ascheschmelzpunkt, ist es vorteilhaft, das Pyrolysegas vorher zu entstauben, sonst ist ein ähnlich hoher Aufwand zur Entfernung der geschmolzenen Asche erforderlich wie bei Flugstromreaktoren.

Bei Eintritt des überhitzten Pyrolysegases in die Wirbelschicht des Synthesegasreaktors kühlt sich das Gas durch chemische Quenche auf 850°C bis 700°C ab. Die geringste Teermenge im Synthesegas ist dann erreicht, wenn die Pyrolyse so weitgehend durchgeführt wird, dass der Pyrolysekoks gerade für die chemische Quenche ausreicht. In diesem Fall wird die fühlbare Wärme des überhitzten Wirbeigases dazu genutzt die endotherme Reaktion des Pyrolysekokses zu Synthesegas zu decken. Eine Beheizung des Synthesegasreaktors ist in diesem Fall also nicht erforderlich.

Wenn man die Pyrolyse als Hochtemperaturpyrolyse bei Temperaturen zwischen 500°C und 800°C betreibt, kann die Reaktionszeit im Vergleich zur Niedertemperaturpyrolyse wesentlich verkürzt werden. Bei der Hochtemperaturpyrolyse verbleibt fast reiner Kohlenstoff im Pyrolysekoks. Die flüchtigen Bestandteile werden zu Pyrolysegas umgewandelt. Primäre Teere werden hier schon zu sekundären und tertiären Teeren umgewandelt.

Der Hochtemperaturpyrolyse können mehrere Niedertemperaturpyrolysen vorgeschaltet sein, was die Nutzung der fühlbaren Wärme aus dem Prozess erleichtert.

Grundsätzlich kann die Wärme für die Pyrolyse indirekt durch eine Wand übertragen werden. Das erfordert große Übertragungsflächen und die Förderung des Wärmeeintrages durch eine Bewegung der Biomasse bzw. des Pyrolysekokses.

Die Biomasse bzw. der Pyrolysekoks kann auch direkt durch heiße Gase oder durch partielle Oxidation mit Sauerstoff erhitzt werden. Als heißes Gas nutzt man zweckmäßigerweise das Pyrolysegas, das über einen Gaskreislauf und eine Heizeinrichtung erhitzt wird. Das heiße Gas kann ein Wanderbett aus Biomasse bzw. Pyrolysekoks durchströmen. Der Kontakt mit dem heißen Gas kann auch durch Aufwirbelung des Pyrolysekokses mittels Rührorganen hergestellt werden.

Die Zeit für die Pyrolyse lässt sich noch weiter verkürzen, wenn man die Pyrolyse in einer Wirbelschicht durchführt. In einer Wirbelschicht wird der Stoffübergang durch Zerkleinerung der Biomasse bzw. des Pyrolysekokses stark erhöht. Die Zerkleinerung kann durch Zusatz eines inerten Bettmaterials, wie Sand, erhöht werden. Es ist vorteilhaft, die Abwärme aus dem Prozess für eine mehrstufige Pyrolyse zu nutzen. Eine Wirbelschicht lässt eine Beheizung durch Rohre oder Stäbe zu, weil der Wärmeübergang in einer Wirbelschicht sehr gut ist. Es ist aber auch möglich, die Wärmeenergie mindestens teilweise über das Pyrolysegas einzubringen. Das Pyrolysegas kann dazu mittels Gebläse im Kreislauf geführt werden. Alternativ kann die Wärmezufuhr auch durch partielle Oxidation mit Sauerstoff erfolgen.

Es ist vorteilhaft, wenn das Pyrolysegas vor Eintritt in den Synthesegasreaktor durch ein Katalysatorbett geleitet wird. Das Katalysatorbett kann unterhalb der Wirbelschicht des Synthesegasreaktors angeordnet sein. Der Katalysator kann so gewählt werden, dass bevorzugt Teere und Methan zu Synthesegas umgesetzt werden können. Das Pyrolysegas muss dann nicht so stark erhitzt werden. Als Katalysatoren sind beispielsweise trägerfixierte Übergangsmetalle wie Nickel geeignet. Der Katalysator kann auch Ammoniak aus dem überhitzten Pyrolysegas entfernen.

Bei der Weiterverarbeitung des Synthesegases, beispielsweise zu Wasserstoff, müssen Methan und höhere Kohlenwasserstoffe abgetrennt, und dem Synthesegasreaktor erneut zugeführt werden. Durch Zumischung dieser Gase zum erhitzten Pyrolysegas tritt eine chemische Quenche in der Gasphase ein, die katalytisch unterstützt werden kann. Auf diese Weise wird das eintretende Wirbelgas abgekühlt und stellt geringere Anforderungen an die Staubfreiheit und die Konstruktion. Die Abkühlung lässt sich durch die Zumischung von kalten Gasen unterstützen.

Die fühlbare Wärme des Synthesegases kann man bei großen industriellen Anlagen nur mit hohem Aufwand über die Wand eines einzigen Schneckenförder-Stranges einbringen wie das in DE 601 20 957 T2 beschrieben ist. Das würde zu geometrischen Problemen führen. Daher wird vorgeschlagen, die Schneckenförderer nach Art eines Rohrbündelwärmetauschers anzuordnen. Das hält die Apparatedimensionen in Grenzen.

Wirbelschichtreaktoren sind nur begrenzt teillastfähig. Das gilt insbesondere für das erfindungsgemäße Verfahren, da die Menge des Wirbelgases, anders als bei der Einspeisung von separat erzeugtem Wasserdampf, nicht beliebig einstellbar ist. Um dennoch einen großen Regelbereich einzurichten, ist es zweckmäßig das Wirbelgas bei hoher Last, unter Umgehung des Wirbelschichtreaktors, am Kopf des jeweiligen Wirbelschichtreaktors einzuleiten. Im Falle des Synthesegasreaktors wird das überhitzte Pyrolysegas vor Einleitung in die Wirbelschicht dem Synthesegas zugemischt.

Die Erfindung wird an Hand der Figuren 1 bis 5 beispielhaft beschrieben.
- Fig. 1: stellt den Erfindungsgedanken in abstrakter Form dar.
- Fig. 2: zeigt eine detailliertere Darstellung der Erfindung.
- Fig. 3: zeigt eine Darstellung mit 2 Reaktoren für die Pyrolyse, wobei einer davon eine Wirbelschicht besitzt.
- Fig. 4: zeigt ein Detail von Fig. 3.
- Fig. 5: zeigt eine Kaskade von Pyrolysereaktoren.

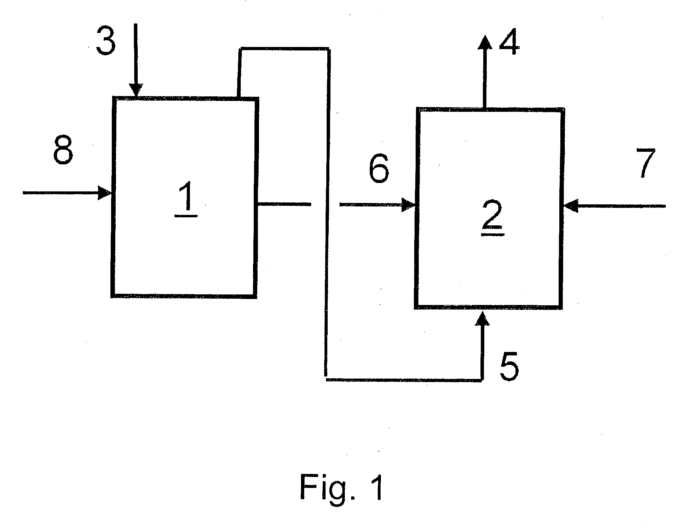

Nach Fig.1 besteht die Vorrichtung zur Herstellung von Synthesegas aus Biomasse aus zwei Reaktoren. In Reaktor 1 wird die eingebrachte Biomasse 3 in Pyrolysekoks und Pyrolysegas durch Zufuhr einer Wärmemenge 8 oder durch partielle Oxidation zerlegt. Der Pyrolysekoks 6 wird in die Wirbelschicht eines Synthesegasreaktors 2 eingebracht. Das Pyrolysegas 5 wird als Wirbelgas für die Wirbelschicht des Synthesegasreaktors 2 genutzt. Durch Zufuhr einer Wärmemenge 7 in den Synthesegasreaktor oder durch partielle Oxidation wird aus dem Pyrolysekoks 6 und dem Pyrolysegas 5 das Synthesegas 4 erzeugt.

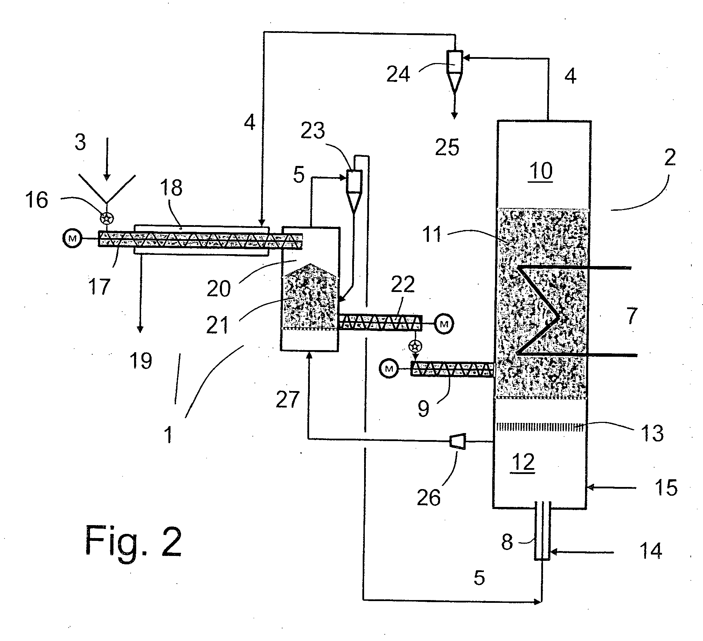

Die Fig. 2 zeigt eine detailliertere Darstellung des erfindungsgemäßen Gedankens. Die Pyrolyse 1 besteht aus mehreren Vorrichtungen zum Fördern und Pyrolysieren der eingebrachten Biomasse. Die Biomasse 3 wird über eine Zellradschleuse 16 in einen Schneckenförderer 17 eingebracht, der einen Heizmantel 18 aufweist, welcher vom heißen Synthesegas 4 durchströmt wird. Das Synthesegas geht dann zur Weiterverarbeitung 19. Der in 17 gebildete Pyrolysekoks fällt in eine Vorlage 20. Der Pyrolysekoks 21 wird von den beiden Schnecken 22 und 9 in das Wirbelbett 11 des Synthesegasreaktors 2 transportiert. Es ist zweckmäßig, zwischen den Schnecken 22 und 9 eine Zellradschleuse einzurichten, damit das Pyrolysegas nicht auf diesem Wege in den Synthesegasteaktor 2 gelangt.

Das Pyrolysegas 5 aus der Vorlage wird mit einem Zyklon 23 entstaubt und wird am unteren Teil 12 des Synthesegasreaktors 2 eingeleitet. Das Pyrolysegas 5 durchströmt das heiße Wirbelbett 11, in das über eine Heizvorrichtung eine Wärmemenge 7 eingebracht wird. Pyrolysegas und Pyrolysekoks werden hier bei 750°C bis 950°C zu Synthesegas umgesetzt und gelangen in den Freiraum 10 des Synthesegasreaktors 2, der hier als Reaktor mit stationärer Wirbelschicht gezeichnet ist. Das Synthesegas 4 wird im Zyklon 24 entstaubt. Die Asche 25 kann als Düngemittel auf den Acker ausgebracht werden, weil sie nicht aufgeschmolzen ist.

Um den Teergehalt des Pyrolysegases 5 zu reduzieren, wird dieses mittels Brenner 8 mit Sauerstoff 14 bzw. Luft partiell oxidiert. Es ist vorteilhaft, Gase 15 aus der Aufarbeitung des Synthesegases, wie Methan, dem überhitzten Pyrolysegas zuzumischen. Je nach Temperatur an dieser Stelle, wird ein großer Teil des Methans schon zu Synthesegas umgesetzt. Durch diese chemische Quenche wird die Temperatur in Raum 12 abgesenkt. Einen noch höheren Umsatz von Teeren, Methan und Ammoniak lässt sich durch einen geeigneten Katalysator 13 erzielen, der vor dem Düsenboden des Wirbelbettes 11 angeordnet ist.

Unter Bezugnahme auf Fig. 1 wird mit dem erfindungsgemäßen Verfahren der Teergehalt des Synthesegases insbesondere dadurch abgesenkt, dass die Biomasse (3) nicht direkt in den Synthesegasreaktor (2) eingespeist wird, sondern zuvor in einem Pyrolysereaktor (1) in Pyrolysegas (5) und Pyrolysekoks (6) gespalten wird. Weil das als Wirbelgas genutzte Pyrolysegas (5) auf fast reinen Kohlenstoff trifft, entsteht ein fast teerfreies Synthesegas (4). Die erforderliche Reaktionsenthalpie wird über die Wärmeströme (7) und (8) bereitgestellt.

Um den Gehalt flüchtiger Substanzen im Pyrolysekoks zu reduzieren, kann der Pyrolysekoks 21 in der Vorlage 20 von heißem, weitgehend entteertem Pyrolysegas 27 aus dem Raum 12 durchströmt werden. Das Pyrolysegas muss dabei durch einen Verdichter 26 auf einen höheren Druck gebracht werden. Je nach Menge des eingespeisten Pyrolysegases 27 und der Konstruktion der Vorlage 20 kann sich auch ein Wirbelbett in der Pyrolysekoksschicht ausbilden. Bei geringer Gasgeschwindigkeit bildet sich lediglich ein Wanderbett aus Pyrolysekoks aus. Der Umsatz in einem Wirbelbett ist natürlich größer. Um den Prozess weiter zu verbessern, kann ein kleiner Teilstrom des Pyrolysegases 27 am Ende der Schnecke 22 eingespeist werden. So gelangt nur weitgehend entteertes Pyrolysegas über die Schnecke 9 in die Wirbelschicht.

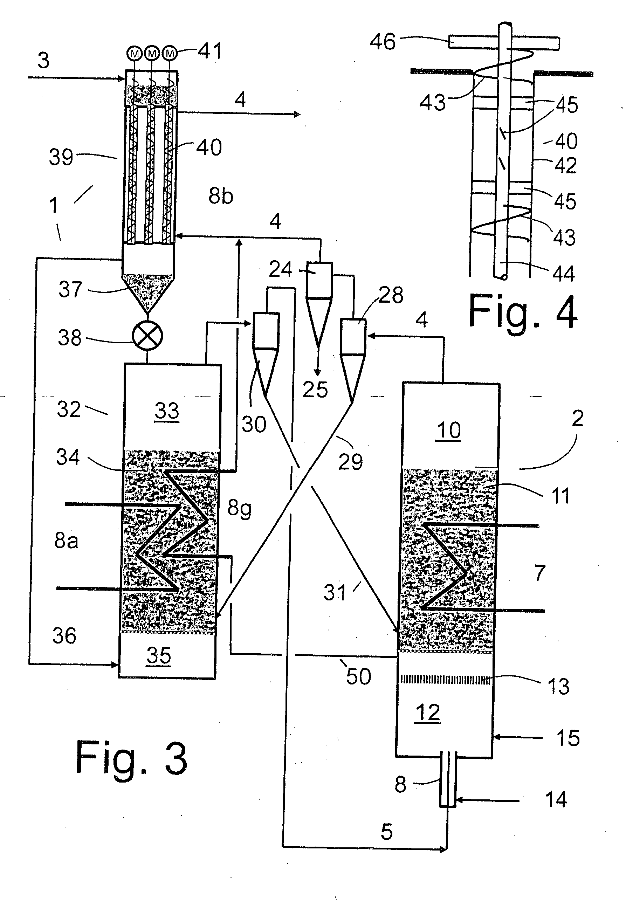

Fig. 3 zeigt eine Vorrichtung mit einem Niedertemperatur- und einem Hochtemperaturpyrolysator zur Belieferung des Synthesegasreaktors 2 mit Pyrolysegas und Pyrolysekoks. Die Beheizung des Niedertemperaturpyrolysators geschieht hier mit dem heißen Synthesegas 4, das die Rohre der Schneckenförderer 40 ähnlich wie die Rohre eines Rohrbündelwärmetauschers umströmt. Die Biomasse 3 wird am Kopf des Niedertemperaturpyrolysators 39 aufgegeben. Der gewünschte Systemdruck wird hier durch nicht dargestellte vorgelagerte Einrichtungen, wie beispielsweise Druckschleusen, aufgeprägt. Die Biomasse 3 gelangt über eine Vielzahl von Schneckenförderern 40 in den unteren Teil des Niedertemperaturpyrolysators 39. Von hier wird der Pyrolysekoks 37 über eine Zellradschleuse 38 in den Hochtemperaturpyrolysator 32 eingebracht. Das Pyrolysegas 36 wird in den Boden 35 des Hochtemperaturpyrolysators 32 eingeleitet, durchströmt dessen Wirbelbett 34 und gelangt über den Zyklon 30 als weitgehend teerfreies Pyrolysegas 5 in den Synthesegasreaktor 2. Hochtemperaturpyrolysator 32 und Synthesegasreaktor 2 sind als Reaktoren mit zirkulierender Wirbelschicht ausgebildet. Diese beiden Reaktoren tauschen ihr Bettmaterial gegenseitig aus, so wie das bei der allothermen Vergasung nach dem Stand der Technik zwischen Reaktor und Brenner geschieht. Der Synthesegasrektor 2 ist in diesem Fall der "Brenner" und der Hochtemperaturpyrolysator der "Reaktor". Über den Freiraum 10, den Zyklon 28 und die Leitung 29 gelangt ein großer Teil des Bettmaterials in den Hochtemperaturpyrolysator 32. Die Leitung 29 besitzt am Ende, wie üblich, einen Siphon, der mit Prozessgas oder Wasserdampf fluidisiert wird. Auf gleiche Weise gelangt auch ein großer Teil des Bettmaterials aus dem Hochtemperaturpyrolysator 32 über den Freiraum 33, den Zyklon 30 und die Leitung 31 in den Synthesegasreaktor zurück.

Prinzipiell kann beiden Reaktoren eine Wärmemenge 7 bzw. 8a über eine Heizeinrichtung in den Wirbelbetten zugeführt werden. Eine Beheizung des Hochtemperaturpyrolysators 32 ist jedoch nicht nötig, da er ja über den Austausch von Bettmaterial aufgeheizt werden kann. Eine Temperaturerhöhung des Pyrolysegases 5 vor den Eintritt in den Raum 12 ist zur Zerstörung von hochmolekularen Verbindungen, die allgemein als Teer bezeichnet werden, auf jeden Fall sinnvoll. Das kann durch einen Heizer im Gasstrom oder, wie hier gezeichnet, durch partielle Oxidation mit Sauerstoff 14 im Brenner 8 geschehen. Dadurch kann der Wärmestrom 7 reduziert werden. Auch das in den Raum 35 eintretende Pyrolysegas 36 kann in gleicher Weise durch partielle Oxidation aufgeheizt werden.

Die Reinigung des Pyrolysegases 5 über den Zyklon 30 ist hier nur symbolisch dargestellt. Um eine ausreichende Staubfreiheit zu gewährleisten, ist mindestens ein Doppelzyklon erforderlich, wie das bei der Reinigung des Synthesegases mit Zyklon 28 und 24 dargestellt ist. Die Eingangszyklone scheiden bei der zirkulierenden Wirbelschicht im Wesentlichen das Bettmaterial, beispielsweise Sand, ab, die nachgeordneten Zyklone, den Pyrolysekoks und die Asche. Der Synthesegaszyklon 24 schleust hauptsächlich Asche 25 aus.

Um einen größeren Regelbereich für die Leistung des Synthesegasreaktors 2 zu ermöglichen, kann dieser für eine Teillast ausgelegt werden. Bei höherer Leistung kann dann ein Teil des überhitzten Wirbelgases vor Eintritt in den Düsenboden mittels Leitung 50 abgezweigt und dem Synthesegas 4 zugemischt werden. Um die fühlbare Wärme zu nutzen, ist es vorteilhaft, diese Wärmemenge 8g in den Pyrolysereaktor 32 einzubringen.

Fig. 4 zeigt ein Detail des Niedertemperaturpyrolysators 39 aus Fig. 3. Dargestellt ist ein Ausschnitt eines der vertikal angeordneten Förderschnecken 40. Die Förderschnecken sind so konstruiert und so gesteuert, dass sie den freien Fall der eingebrachten Biomasse verhindern und durch ständiges Rühren einen guten Stoff- und Wärmeaustausch ermöglichen. Die Schneckenwelle 44 besitzt darum nur kurze Abschnitte, die eine Förderschnecke 43 tragen. Dazwischen sind Rührblätter 45 angeordnet, die die Biomasse bzw. den Pyrolysekoks aufwirbeln, und so dem erhitztem Schneckenrohr 42 immer wieder kühleres Material zuführen. Durch Motoren 41 (Fig.3) werden die Schnecken abwechselnd in Links- und Rechtsdrehung versetzt und zwar so, dass die eingebrachte Biomasse sich nicht am Kopf der Schneckenförderer übermäßig anstaut und die Schneckenrohre gut gefüllt bleiben. Damit die Schicht über den Schneckenförderern eine gleichmäßige Höhe erreicht und sich über den Schneckenförderern keine Hohlräume bilden, ragen Rührblätter 46 in diesen Raum hinein, die bis zur benachbarten Schneckenwelle reichen. Durch höhenversetzte Rührblätter 46 oder eine abgestimmte synchronisierte Drehzahlsteuerung ist eine Kollision vermeidbar.

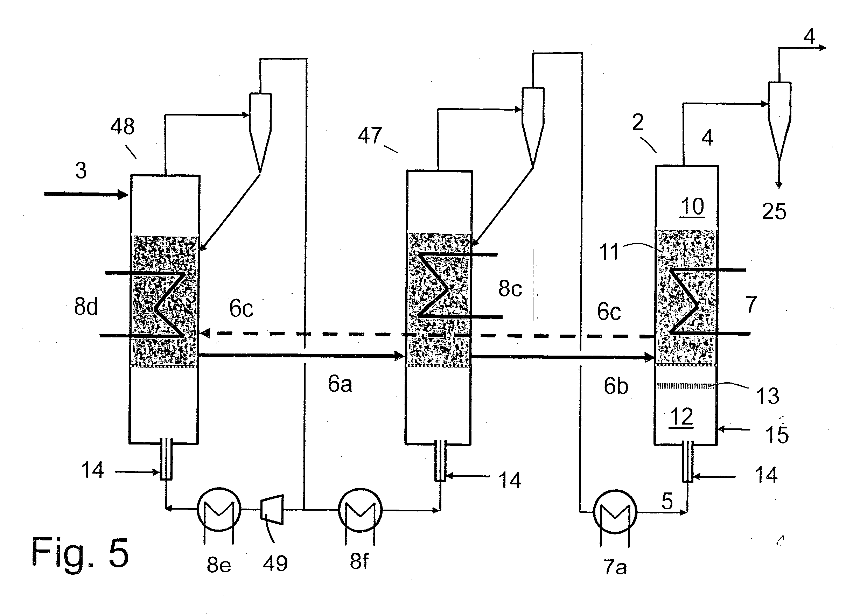

Fig. 5 zeigt zwei Pyrolysereaktoren, die, wie der Synthesegasreaktor 2, eine Wirbelschicht aufweisen. Die Biomasse 3 wird in einen Niedertemperaturpyrolysator 48 eingebracht. Das Pyrolysegas wird über einen Kompressor 49 im Kreis geführt. Damit die Rohre dieses Kreislaufes nicht beheizt werden müssen, sollte die Temperatur nicht unter 350°C sinken. Vorzugsweise sollte dieser Reaktor zwischen 400°C und 550°C betrieben werden. Bei diesen Temperaturen lässt sich Wärme aus dem Prozess, beispielsweise heißes Synthesegas, noch gut einkoppeln. Diese Wärme 8d und 8e kann direkt in das Wirbelbett eingetragen werden oder dem Gaskreislauf zugeführt werden. Als inertes Bettmaterial kann, wie üblich, Sand verwendet werden. Der aufgewirbelte Sand sorgt für eine gute Zerkleinerung der Biomasse bzw. des Pyrolysekokses. Mit dieser Art von Reaktoren kann, trotz niedriger Temperaturen, ein hoher Umsatz erzielt werden. Aus dem Wirbelbett des Niedertemperaturpyrolysators 48 gelangt das Bettmaterial mittels Fördereinrichtung 6a in die Wirbelschicht des Hochtemperaturpyrolysators 47, von diesem mittels Fördereinrichtung 6c in den Synthesegasreaktor 2. Das Wirbelbett des Synthesegasreaktors 2 wird mit geringem Gehalt von Pyrolysekoks betrieben, während der Gehalt an Pyrolysekoks im Niedertemperaturpyrolysator 48 am höchsten ist, ist er im Synthesegasreaktor sehr niedrig. Um den Sandaustrag über die Strecke 6a auszugleichen, wird Bettmaterial aus dem Synthesegasreaktor mittels Förderanlage 6c in den Niedertemperaturpyrolysator 48 zurückgebracht.

Bei den genannten Förderanlagen kann es sich beispielsweise um Schneckenförderer handeln. Möglich ist auch die drei Wirbelschichtreaktoren mit zirkulierender Wirbelschicht zu betreiben. Das Bettmaterial wird dann über Zyklone den dargestellten Weg 6a, 6b, 6c nehmen.

Das Pyrolysegas aus dem Niedertemperaturpyrolysator 48 dient als Wirbelgas für den Hochtemperaturpyrolysator 47. Von diesem gelangt das Pyrolysegas 5 in den Synthesegasreaktor 2. Die notwendigen Wärmeströme 7, 8c, 8d können direkt in die Wirbelschichten mittels Wärmetauscher eingebracht werden. Die Einbringung der Wärmeströme 7a, 8e, 8f hat die gleiche Wirkung. Grundsätzlich kann die notwendige Reaktionsenthalpie mindestens teilweise durch partielle Oxidation mit Sauerstoff 14 aufgebracht werden. Der Hochtemperaturpyrolysator 47 wird zweckmäßigerweise zwischen 600°C und 800°C betrieben. Die Vorteile, die sich aus einer Überhitzung des Pyrolysegases 5 mit nachfolgender Katalyse ergeben, wurden schon weiter oben beschrieben. Alle drei Reaktoren lassen den Betrieb sowohl mit stationärer Wirbelschicht als auch mit zirkulierender Wirbelschicht zu.

Mit dem erfindungsgemäßen Verfahren kann ein qualitativ sehr reines Synthesegas durch primäre Maßnahmen hergestellt werden. Das gilt insbesondere für den sehr niedrigen Teergehalt. Das erspart eine aufwändige Nachreinigung des Synthesegases und eine aufwändige Reinigung des Abwassers. Durch die direkte Verwendung des Pyrolysegases als Wirbelgas für den Synthesegasreaktor entfällt die zusätzliche Bereitstellung von überhitztem Wasserdampf als Wirbelgas. Anders als bei Festbettvergasern und Flugstromvergasern ist die Asche der Biomasse als Mineraldünger für die Landwirtschaft verwendbar. Das ist insbesondere für den knapper werdenden Phosphor von großer Bedeutung.

Die Erfindung ist vorstehend anhand von Ausführungsbeispielen exemplarisch beschrieben worden. Dabei versteht sich, dass die Erfindung nicht auf die beschriebenen Ausführungsbeispiele beschränkt ist. Vielmehr ergeben sich für den Fachmann im Rahmen der Erfindung vielfältige Abwandlungs- und Modifikationsmöglichkeiten und der Schutzumfang der Erfindung wird insbesondere durch die nachfolgenden Patentansprüche festgelegt.

## Patentansprüche

1. Verfahren zur Herstellung von Synthesegas aus Biomasse, bei dem
a) die Biomasse in mindestens einem Pyrolysereaktor in Pyrolysekoks und Pyrolysegas zerlegt wird,
b) der Pyrolysekoks in die Wirbelschicht eines Synthesegasreaktors eingebracht wird,
c) das Pyrolysegas als Wirbelgas für den Synthesegasreaktor genutzt und das Pyrolysegas in die Wirbelschicht des Synthesegasreaktors eingeleitet wird,
d) das Pyrolysegas vor Eintritt in die Wirbelschicht des Synthesegasreaktors durch eine Heizvorrichtung oder Zugabe von Sauerstoff auf eine Temperatur zwischen 850°C und 1600°C erhitzt wird,
e) das Pyrolysegas in der Wirbelschicht des Synthesegasreaktors durch chemische Quenche auf 850°C bis 700°C abgekühlt wird und
f) das Synthesegas durch Umsetzung von Pyrolysegas und Pyrolysekoks im Synthesegasreaktor erzeugt wird.

2. Verfahren nach Anspruch 1, **dadurch gekennzeichnet, dass** in mindestens einem Pyrolysereaktor eine Hochtemperaturpyrolyse bei einer Temperatur von 500°C bis 800°C durchgeführt wird.

3. Verfahren nach Anspruch 1 oder 2, **dadurch gekennzeichnet, dass** die Pyrolyse so weitgehend durchgeführt wird, dass so wenig Pyrolysekoks für den Synthesegasreaktor verbleibt, dass dieser für die chemische Quenche gerade ausreicht.

4. Verfahren nach einem der Ansprüche 1 bis 3, **dadurch gekennzeichnet, dass** mindestens ein Pyrolysereaktor eine Wirbelschicht enthält.

5. Verfahren nach einem der Ansprüche 1 bis 4, **dadurch gekennzeichnet, dass** das Wirbelgas vor Eintritt in die Wirbelschicht des Synthesegasreaktors durch ein Katalysatorbett strömt.

6. Verfahren nach einem der Ansprüche 1 bis 5, **dadurch gekennzeichnet, dass** das Gas aus der Weiterverarbeitung des Synthesegases dem erhitzten Pyrolysegas vor Eintritt in die Wirbelschicht des Synthesegasreaktors zugemischt wird.

7. Verfahren nach einem der Ansprüche 1 bis 6, **dadurch gekennzeichnet, dass** mindestens einer der Pyrolysereaktoren eine Vielzahl von außen beheizten Schneckenförderern aufweist, die in der Art eines Rohrbündelwärmetauschers angeordnet sind.

8. Verfahren nach einem der Ansprüche 1 bis 7, **dadurch gekennzeichnet, dass** das Wirbelgas, unter Umgehung des jeweiligen Wirbelbettes, mindestens teilweise dem Gas am Ausgang des Reaktors zugemischt wird.

## Claims

1. Process for the manufacture of synthesis gas from biomass, wherein:
a. the bio-mass is broken down into pyrolysis coke and pyrolysis gas inside at least one pyrolysis reactor,
b. the pyrolysis coke is transferred into the fluidised bed of a synthesis gas reactor,
c. the pyrolysis gas is used as the swirl-gas for the synthesis gas reactor, and the pyrolysis gas is fed into the fluidised bed of the synthesis gas reactor,
d. before entering the fluidised bed of the synthesis gas reactor, the pyrolysis gas is heated, by means of a heater or the addition of oxygen, to a temperature between 850°C and 1600°C,
e. the pyrolysis gas in the fluidised bed of the synthesis gas reactor is cooled down, by means of chemical quenchers, to between 700°C and 850°C, and
f. the synthesis gas is produced by reacting of the pyrolysis gas and pyrolysis coke into the synthesis gas reactor.

2. Process according to claim 1, **characterised in that** high-temperature pyrolysis is carried out at a temperature between 500°C and 800°C in at least one pyrolysis reactor.

3. Process according to claim 1 or 2, **characterised in that** the pyrolysis is carried out to the extent that the quantity of pyrolysis coke left for the synthesis gas reactor is small enough that it is exactly adequate for the chemical quencher.

4. Process according to any of claims 1 to 3, **characterised in that** at least one pyrolysis reactor contains a fluidised bed.

5. Process according to any of claims 1 to 4, **characterised in that** the fluidising gas is passed through a catalyst bed before entry into the fluidised bed of the synthesis gas reactor.

6. Process according to any of claims 1 to 5, **characterised in that** the gas produced by subsequent treatment of the synthesis gas is mixed with the heated pyrolysis gas before entry to the fluidised bed of the synthesis gas reactor.

7. Process according to any of claims 1 to 6, **characterised in that** at least one of one of the pyrolysis reactors comprises a number externally heated screw conveyors, which are arranged in the manner of a tube bundle heat exchanger.

8. Process according to any of claims 1 to 7, **characterised in that** the fluidising gas, by bypassing the relevant fluidised bed, becomes at least partly mixed with the gas at the exit of the reactor.

## Revendications

1. Procédé destiné à produire du gaz de synthèse à partir d'une biomasse, lors duquel
a) dans au moins un réacteur de pyrolyse, on décompose la biomasse en coke de pyrolyse et en gaz de pyrolyse,
b) on introduit le coke de pyrolyse dans la lit fluidisé d'un réacteur de production de gaz de synthèse,
c) on utilise le gaz de pyrolyse en tant que gaz de fluidisation pour le réacteur de production de gaz de synthèse et on conduit le gaz de pyrolyse dans le lit fluidisé du réacteur de production de gaz de synthèse,
d) avant son entrée dans le lit fluidisé du réacteur de production de gaz de synthèse, on chauffe le gaz de pyrolyse à une température comprise entre 850°C et 1600°C via un dispositif de chauffage ou par addition d'oxygène,
e) on refroidit le gaz de pyrolyse à une température comprise entre 850°C et 700°C dans le lit fluidisé du réacteur de production de gaz de synthèse par quench chimique et
f) on créé le gaz de synthèse par transformation de gaz de pyrolyse et de coke de pyrolyse dans le réacteur de production de gaz de synthèse.

2. Procédé selon la revendication 1, **caractérisé en ce que** dans au moins un réacteur de pyrolyse, on procède à une pyrolyse à haute température à une température comprise entre 500°C et 800°C.

3. Procédé selon la revendication 1 ou la revendication 2, **caractérisé en ce qu'**on procède à la pyrolyse à un point tel qu'il reste une quantité de coke de pyrolyse si faible pour le réacteur de production de gaz de synthèse qu'elle suffise tout juste pour le quench chimique.

4. Procédé selon l'une quelconque des revendications 1 à 3, **caractérisé en ce qu'**au moins un réacteur de pyrolyse contient un lit fluidisé.

5. Procédé selon l'une quelconque des revendications 1 à 4, **caractérisé en ce qu'**avant son entrée dans le lit fluidisé du réacteur de production de gaz de synthèse, le gaz de fluidisation circule à travers à lit de catalyseur.

6. Procédé selon l'une quelconque des revendications 1 à 5, **caractérisé en ce qu'**avant l'entrée dans le lit fluidisé du réacteur de production de gaz de synthèse, on mélange le gaz émanant du traitement ultérieur du gaz de synthèse avec le gaz de pyrolyse chauffé.

7. Procédé selon l'une quelconque des revendications 1 à 6, **caractérisé en ce qu'**au moins l'un des réacteurs de pyrolyse comporte une pluralité de convoyeurs à vis chauffés à l'extérieur qui sont placés à la manière d'un échangeur thermique à faisceau tubulaire.

8. Procédé selon l'une quelconque des revendications 1 à 7, **caractérisé en ce qu'**on mélange le gaz de fluidisation au moins en partie avec le gaz à la sortie du réacteur en contournant le lit fluidisé respectif.
